# EUROPÄISCHE PATENTSCHRIFT

(11) **EP 1 619 446 B1**
(45) Veröffentlichungstag und Bekanntmachung des Hinweises auf die Patenterteilung: **26.01.2011**
(21) Anmeldenummer: 05010104.7
(22) Anmeldetag: 10.05.2005
(51) Int. Cl.: F24D 17/00

(54) **Verfahren im Warmwasserkreislauf**
Method for controlling a warm water circuit
Procédé pour réguler un circuit d'eau chaude

(30) Priorität: 20.07.2004 DE 102004035167
(43) Veröffentlichungstag der Anmeldung: 25.01.2006
(73) Patentinhaber: WILO AG, 44263 Dortmund (DE)
(72) Erfinder: Albers, Frank, 58239 Schwerte (DE); Pottier, Xavier, 53260 Montigne-le Brillant (FR); Schmied, Stephan, 44139 Dortmund (DE)
(74) Vertreter: COHAUSZ DAWIDOWICZ HANNIG & SOZIEN

(56) Entgegenhaltungen:
- EP-A- 0 391 508
- EP-A- 0 403 806
- DE-A1- 3 522 344
- DE-A1- 10 024 803

## Beschreibung

Die Erfindung betrifft ein Verfahren im Warmwasserkreislauf insbesondere einer Trinkwasserinstallation, mit einer das Warmwasser im Kreislauf umwälzenden Pumpe und einem die Wassertemperatur im Warmwasserkreislauf messenden Sensor, wobei insbesondere zur Desinfektion die Temperatur im Wassererwärmer periodisch über die höchste für das Warmwasser zu Nutzungszwecken erforderliche Normaltemperatur angehoben wird.

Es ist bekannt, in Trinkwarmwasserinstallationen das Warmwasser zwischen dem Trinkwassererwärmer und den Zapfstellen im Kreislauf umzupumpen, damit jede Zapfstelle sehr schnell Warmwasser erhält, ohne längere Zeit erkaltetes Wasser ablaufen lassen zu müssen. Eine derartige Installation für Brauchwasser ist aus der deutschen Offenlegungsschrift DE 100 24 803 A2 bekannt. Sie beschreibt ein Verfahren zur Steuerung einer in einer hydraulisch zu einer Brauchwasserleitung antiparallel geschalteten und zu einem Brauchwassererzeuger führenden Zirkulationsleitung einer Brauchwasseranlage angeordneten Umwälzpumpe, die während einer sich über den größten Teil eines Tages erstreckenden vorgegeben Zeitspanne intermittierend betrieben wird. Die Zirkulationsleitung liegt dabei nahe an der Zapfstelle, so dass die Brauchwasserleitung zu der Zapfstelle beim Betrieb der Umwälzpumpe bis zu dem Abzweig mit Warmwasser versorgt wird, so dass nach einer längeren Zapfpause nur eine minimale Menge an abgekühltem Wasser aus der Zapfstelle abfließen muss.

In dem Wassererwärmer, den Leitungen und angeschlossenen Geräten insbesondere der Pumpe vermehren sich im Warmwasser Keime insbesondere Legionellen sehr schnell, so dass die Forderung besteht, regelmäßig Desinfektionen durchzuführen. Hierzu ist es bekannt, das Wasser im Wassererwärmer in periodischen Abständen weit über die übliche Warmwassertemperatur (45 - 60 °C Warmwassernormtemperaturen) in einen Bereich insbesondere zwischen 70 bis 80 Grad Celsius anzuheben, in dem die Keime abgetötet werden. Ein derartiges Verfahren ist aus der europäischen Patentanmeldung EP 0 391 508 A2 bekannt. Sie beschreibt ein Verfahren zum Desinfizieren von Brauchwasser, das innerhalb einer vorbestimmten Mindestdauer auf eine keimtötende Mindesttemperatur von etwa 70°C erhitzt wird. Um eine einwandfreie Desinfektion in allen Bereichen eines Brauchwassernetzes zu gewährleisten, schlägt sie des Weiteren vor, sowohl das Erreichen bzw. die Einhaltung der keimtötenden Mindesttemperatur als auch die Einhaltung der erforderlichen Mindestdauer gemeinsam im Rücklauf des Brauchwassers zu überwachen. Dieses auf mindestens 70°C erhitzte Wasser wird dann von der Pumpe durch die Leitungen gefördert und erreicht auch die Zapfstellen, so dass der Wasserentnehmer sich verbrühen kann. Um dies weitgehend zu verhindern, werden die Desinfektionsintervalle meist während der Nacht durchgeführt.

Außerhalb der Hauptnutzungszeiten, insbesondere während der Nacht, wird aber aus Gründen des Energiesparens die im Warmwasserkreislauf sitzende Pumpe häufig abgestellt oder mit niedriger Drehzahl gefahren, so dass damit das Problem auftritt, dass während des Desinfektionsintervalls die Pumpe das Warmwasser hoher Temperatur nicht oder nicht ausreichend umwälzt und somit eine ausreichende Desinfektion der Leitungen und der angeschlossenen Geräte insbesondere der Pumpe verhindert wird. Hierzu ist es bekannt, die Temperatur im Speicher zu messen und hierdurch den Temperaturanstieg während der Desinfektion zu erkennen. Dies erfordert aber eine Verbindungsleitung zwischen dem Wassererwärmer und der Pumpe.

Daneben ist es bekannt, die Pumpe mittels Temperatursensoren im Warmwasserkreislauf bedarfsgerecht zu regeln. Beispielsweise ist aus der deutschen Offenlegungsschrift DE 35 22 344 A1 ein Verfahren zur Regelung der Temperatur des an ein Warmwasser-Versorgungssystems mit Zirkulationsleitung angeschlossenen Verbrauchern zufließenden Warmwassers bekannt, bei dem die Zirkulationspumpe nur dann anläuft, wenn von einem Verbraucher Warmwasser gezapft wird und die Warmwassertemperatur im Warmwassernetz unter der Solltemperatur liegt, und dann abgeschaltet wird, wenn die Warmwasserzapfung beendet oder die Wassertemperatur im Warmwassernetz der Solltemperatur entspricht. Die Pumpendrehzahl darf dabei höchstens soweit reduziert werden, dass das Rücklaufwasser um nicht mehr als fünf Kelvin gegenüber der Temperatur im Wassererwärmer abfällt.

Es ist erstens bekannt, die Pumpenregelung bei schwankender Temperatur im Wassererwärmer mit zwei Temperatursensoren zu realisieren. Dabei ist ein Sensor im Wassererwärmer oder im Vorlauf in der Nähe des Wassererwärmers und ein Sensor im Rücklauf nahe der Pumpe oder in der Pumpe angeordnet.

Es ist zweitens bekannt, die Pumpenregelung bei konstanter Temperatur im Warmwassererwärmer mit einem Sensor zu realisieren. Der Sensor ist dabei in der Pumpe oder im Rücklauf nahe der Pumpe angeordnet.

Eine Pumpe zur Förderung eines temperierten Fluids, in der ein Fühler zum Erfassen der Temperatur des Fluids angeordnet ist und an deren Motorengehäuse eine das Messsignal auswertende Elektronik in einem kastenförmigen Modul angeordnet ist, ist aus der europäischen Patentanmeldung EP 0 403 806 A1 bekannt.

Findet dagegen die Desinfektion in einem Zeitraum statt, in dem eine temperaturgeregelte Pumpe läuft, so geschieht es, dass der die Warmwassertemperatur erfassende und die Pumpe in ihrer Drehzahl steuernde Sensor die Pumpe in ihrer Drehzahl herunterfährt, sobald er die hohen Temperaturen eines Desinfektionsintervalls erfasst. Damit arbeiten Sensor und Pumpe entgegen der Desinfektionsaufgabe und verhindern eine wirkungsvolle Desinfektion.

Aufgabe der Erfindung ist es, ein Verfahren zu schaffen, durch das bei geringem konstruktiven Aufwand die Perioden/Intervalle höherer Temperatur als die im Warmwasserkreislauf übliche Temperatur in jeder Betriebsphase erkannt werden, so dass die Perioden/Intervalle in ihrer Wirkung, insbesondere in ihrer Desinfektionswirkung, unterstützt werden.

Diese Aufgabe wird erfindungsgemäß dadurch gelöst, dass zum Erkennen höherer periodischer Temperaturanstiege insbesondere thermischer Desinfektionsintervalle während Pumpenabschaltzeiten oder Zeiten niedriger Drehzahlen die Pumpe in einer Anfangsphase (Anlernphase) in einem Zeitabschnitt und/oder in mehreren Zeitabschnitten eingeschaltet und/oder mit höherer Drehzahl gefahren wird, und dass bei einem Ansteigen der vom Sensor während des Zeitabschnitts oder während der Zeitabschnitte gemessenen Temperatur über die höchste Normaltemperatur eine Elektronik den/die höheren vom Sensor erhaltenen Temperaturwert(e) erfasst und auswertet.

Damit während des Pumpenlaufs die Pumpenregelung durch solch hohe Temperaturen über den Normaltemperaturen nicht in einer Weise reagiert, die die Wirkung der hohen Temperaturen aufhebt, wird in einer Alternative vorgeschlagen, dass zum Erkennen höherer periodischer Temperaturanstiege insbesondere thermischer Desinfektionsintervalle während des Pumpenlaufs die die Temperatur regelnde Pumpensteuerung in einer Anfangsphase (Anlernphase) in einem Zeitabschnitt und/oder in mehreren Zeitabschnitten ausgeschaltet wird, und dass bei einem Ansteigen der vom Sensor während des Zeitabschnitts oder während der Zeitabschnitte gemessenen Temperatur über die höchste Normaltemperatur eine Elektronik den/die höheren vom Sensor erhaltenen Temperaturwert(e) erfasst und auswertet.

Durch das erfindungsgemäße Verfahren wird in jeder Betriebsphase und damit auch bei abgeschalteter oder mit niedriger Drehzahl fahrender Pumpe erkannt, dass die Wärmequelle eine höhere Temperatur erzeugt, als für die Warmwasserversorgung notwendig ist. Hierbei orientiert sich das Erkennungs- und Regelprogramm an der wiederkehrenden Periode höherer Temperaturen insbesondere der Desinfektion. Unter einer "höheren Drehzahl" wird vorzugsweise eine Drehzahl verstanden, die mindestens gleich der normalen Drehzahl dieser Pumpe oder eine darüberliegende Drehzahl ist. Im Falle eines Ein-/Aus-Takten einer Pumpe wird das Taktverhältnis zu Gunsten einer längeren Einschaltzeit geändert.

Beide Verfahren als auch die Merkmale der Unteransprüche haben folgende Vorteile:

Es wird eine kostengünstige und montagefreundliche Kombination aus Temperatur- und Zeitsteuerung geschaffen, die eine periodische thermische Desinfektion unterstützt, unabhängig davon, ob die Desinfektion innerhalb oder außerhalb der Nutzungszeit liegt.

Es wurde ein Algorithmus entwickelt, mit dem die Pumpe den Desinfektionsbetrieb des Speichers automatisch erkennt, so dass sie den Volumenstrom entsprechend anpassen kann. Hierbei sind keine externen Zusatzteile erforderlich.

Der Betrieb mit höheren Temperaturen insbesondere der Desinfektionsbetrieb wird auch außerhalb der Nutzungszeiten, insbesondere während der Abschaltzeit der integrierten Zeitsteuerung, erkannt. Das regelmäßig wiederkehrende Intervall hoher Temperaturen des Trinkwassererwärmers wird nach der Inbetriebnahme von der Pumpe erkannt und gelernt.

Während der Anlernphase erfasst die Pumpe einen Temperaturanstieg im Trinkwassererwärmer dadurch, dass sie einen höheren Volumenstrom wählt, als er zur Einhaltung der eingestellten Temperatur an der Pumpe erforderlich wäre. Während der Anlernphase geht die Pumpe auch während der programmierbaren Ausschaltzeit nicht völlig außer Betrieb, so dass die thermische Desinfektion auch in dieser Zeit erkannt wird.

Der Volumenstrom muss während der Anlernphase nicht durchgängig höher als erforderlich gewählt werden, vielmehr kann er nur während bestimmter Testperioden angehoben werden. Dauer und Abstand der Testperioden erlernt die Pumpe selbsttätig aus dem Verhalten des Zirkulationssystems.

An geringfügige Verschiebungen des Desinfektionsintervalls passt sich der Algorithmus unverzüglich an. Auf starke Verschiebungen des Desinfektionsintervalls reagiert der Algorithmus mit einer erneuten Anlernphase.

Das frühzeitige und rechtzeitige Erkennen einer höheren Wassertemperatur ist nicht nur bei einer Desinfektion, sondern auch bei einem Umschalten vom Heizkreis auf die Trinkwassererwärmung (insbesondere bei Verwendung eines Dreiwegeventils) wichtig. Es kann dann bei Wasserentnahme geschehen, dass die Wassertemperatur ansteigt und die geregelte Pumpe entgegen arbeitet.

Schließlich wird noch darauf hingewiesen, dass in diesem Text wie auch in den Ansprüchen unter einer Drehzahlsteuerung bzw. -regelung auch ein Ein- und Ausschalten verstanden wird, bei dem die Steuerung/Reglung durch unterschiedliche Ein- und/oder Ausschaltzeiten erfolgt.

Vorteilhafte Ausgestaltungen der Erfindung sind in den Unteransprüchen aufgeführt.

Ausführungsbeispiele der Erfindung sind in den Diagrammen dargestellt und werden im folgenden näher beschrieben. Es zeigen
- Fig. 1: das Prinzip der Suchphase,
- Fig. 2: das Auffinden der ersten Desinfektion,
- Fig. 3: das Auffinden der zweiten Desinfektion,
- Fig. 4: das Bestimmen der Zeit zwischen zwei Desinfektionen und damit des Desinfektionsintervalls,
- Fig. 5: zeitgenaues Auffinden des Beginns der Desinfektion und
- Fig. 6: Suchprinzip bei temperaturgeregelter Pumpe.

Eine Trinkwarmwasserinstallation weist einen Warmwasserkreislauf auf mit einem Trinkwassererwärmer, mehreren an den Kreislauf angeschlossenen Warmwasserzapfstellen und einer im Kreislauf angeordneten Pumpe, die das Warmwasser umpumpt, so dass den Zapfstellen stets Warmwasser zur Verfügung steht, ohne größere Mengen erkalteten Wassers ablaufen lassen zu müssen. Im Kreislauf vor oder hinter der Pumpe oder in oder an der Pumpe insbesondere im Pumpenauslass ist ein Temperatursensor angeordnet, der die Pumpe entsprechend der Temperaturen steuert und damit bei unterschiedlicher Warmwasserentnahme und/oder bei unterschiedlichem Wärmeverlust für eine weitgehend gleichbleibende Wassertemperatur sorgt. Der Temperatursensor kann alternativ aber auch an der Pumpe angeschlossenen Teilen/Geräten angeordnet sein, wie z.B. in oder an dem Pumpenmotor.

Um die Geräte und Leitungen der Installation regelmäßig zu desinfizieren, erzeugt der Wassererwärmer über bestimmte Zeiträume (Perioden/Intervalle) eine Temperatur, die mit 70 - 80 °C erheblich höher liegt als die Normaltemperatur (45 - 60 °C) des Warmwassers. (Für die Normaltemperatur werden in den verschiedenen Ländern unterschiedliche Werte bzw. Bereiche vorgegeben, siehe DVGW W551.) Während dieser thermischen Desinfektionsintervalle pumpt die Pumpe das Warmwasser hoher Temperatur durch alle Leitungen und Geräte, so dass diese, als auch die Pumpe, desinfiziert werden.

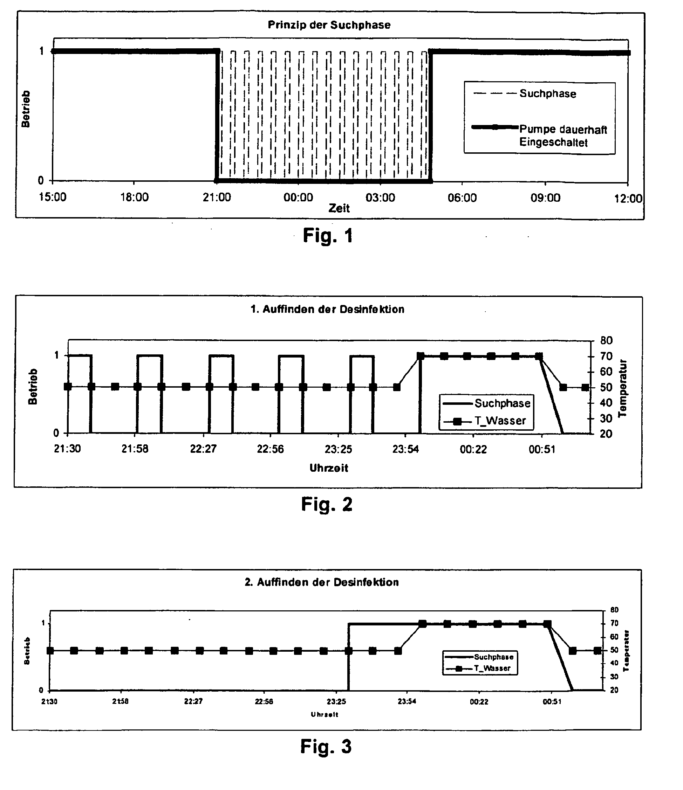

In Zeiten, in denen die Pumpe ausgeschaltet ist oder mit niedriger Drehzahl (Niedrige Drehzahl: 700 bis 1200 1/min; normale Drehzahlen: 2000 bis 2700 1/min.) läuft, ist aber eine Desinfektion verhindert oder eingeschränkt. Hierfür wird dann das folgende Verfahren durchgeführt, das Desinfektionsintervalle automatisch erkennt und gespeichert behält:
Wenn die Desinfektionsfunktion aktiviert ist, wird zunächst die selbstlernende Suchfunktion gestartet. In den Zeiten (Nacht), in denen die Pumpe ausgeschaltet ist, wird in regelmäßigen Abständen (z. B. alle 30 min.) die Pumpe für etwa 10 min. eingeschaltet, wie dies Fig. 1 zeigt.

Registriert die Pumpe einen Anstieg über den normalen Betriebsbereich, so ist der 1. Zeitpunkt der Desinfektion ungefähr gefunden. Die Uhrzeit des Starts der Desinfektion wird abgespeichert und die Pumpe bleibt im hohen Drehzahlbereich bis die Temperatur wieder abfällt. In dieser Nacht erfolgen keine weiteren Testintervalle, siehe Fig. 2.

An den nächsten Tagen wird das Desinfektionsintervall bestimmt. Hierbei benutzt man entweder das gleiche Verfahren weiter wie beim ersten Mal, oder indem jetzt nur etwa 30 min. vor der gespeicherten Uhrzeit gesucht wird, wie dies in Fig. 3 dargestellt ist.

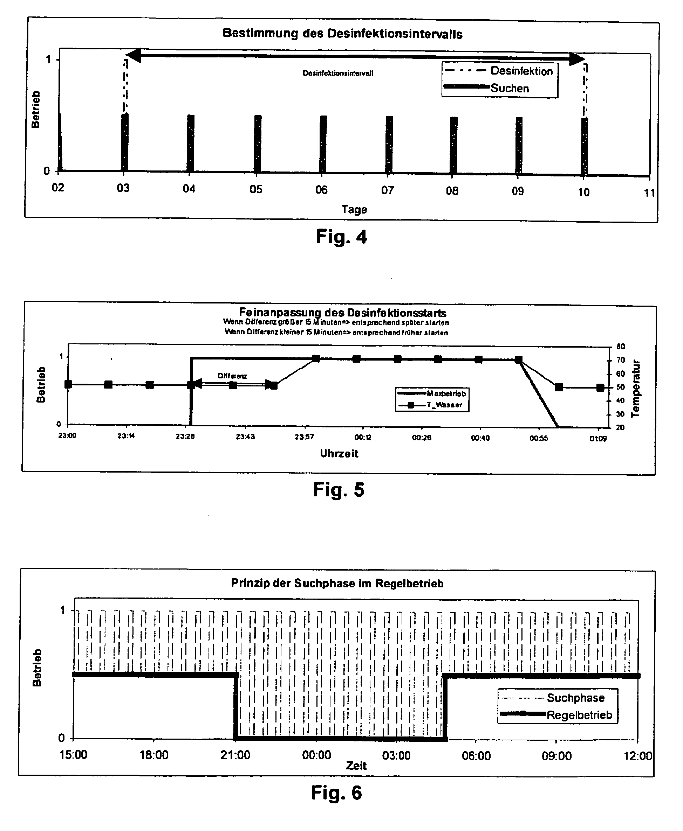

Aus der Zeitdifferenz kann nun das Desinfektionsintervall bestimmt werden, wie dies Fig. 4 zeigt.

Der Start der Desinfektion ist bisher nur mit der Suchauflösung bestimmt. Das Anlernen ist nun beendet. Um den Einschaltzeitpunkt zu optimieren, startet die Pumpe den Maxbetrieb nun immer etwas vor dieser Zeit (z. B. 15 min.) und wartet im Maxbetrieb auf den Anstieg der Wassertemperatur. Der Startzeitpunkt wird so bis auf die unbekannte Umlaufzeit des Wassers genau bestimmt. Erfolgt der Anstieg später als dieses Zeitintervall, dann wird der Startzeitpunkt nach hinten korrigiert, bei früher nach vorne, wie dies in Fig. 5 gezeigt ist. Auf diese Weise werden Gangdifferenzen zwischen Kessel und Pumpe ausgeglichen. Die Pumpe bleibt nach dem Erkennen der Desinfektion bis zum Abfall unter 65 °C auf der Maxstufe eingeschaltet.

Größere Differenzen nach hinten (z. B. eine Uhr wurde bei der Zeitumstellung vergessen) werden sofort ausgeglichen. Größere Differenzen nach vorne brauchen mehrere Korrekturen. Dieses kann durch dynamische Anpassung der Schrittweite beschleunigt werden (z. B. 1* zu spät = 15 min., 2* zu spät = 60 min.). Da bei zu frühem Start der Pumpe die Desinfektion ja trotzdem erfolgt, könnte die Schrittweite nach vorne auch schneller größer werden (1 h, 2 h, ....).

Alternativ könnte auch sofort ein erneutes Anlernen erfolgen, um die nächste Desinfektion sicher zu erkennen und sich darauf zu synchronisieren.

Erreichen die Einschaltzeiten der Desinfektion den Normalbetrieb, ohne dass eine Desinfektion erkannt wird, deutet dies darauf hin, dass die Einstellungen am Kessel geändert wurden und ein erneutes Anlernen erfolgen sollte. Wird beim Anlernen nicht innerhalb von 7 Tagen eine Desinfektion gefunden, so schaltet sich die Funktion aus. Bei Verlust der Uhrzeit wird das Anlernen automatisch gestartet.

Auch kann die Anlernphase zyklisch insbesondere alle 4 bis 8 Wochen wiederholt werden.

Die Vorlaufzeit von ca. 15 min. kann im weiteren auch noch optimiert werden. Durch schrittweise Verkürzung kann sogar die Umlaufzeit des Wassers ermittelt werden, da zunächst die Zeit bis zum Anstieg der Wassertemperatur im gleichen Maße abnimmt. Ist aber die Umlaufzeit erreicht, bleibt die Differenz aber annähernd konstant.

Die Desinfektion kann auch während der Nutzungszeiten tagsüber erfolgen, wie in Fig. 6 dargestellt. Bei einer Temperaturregelung der Pumpe im Zirkulationskreislauf wirkt diese dem Aufheizen des Wassers entgegen. Um die Erkennung der Desinfektion trotzdem zu gewährleisten, kann die Pumpe auch während der Regelzeiten die Prüfung auf einen Temperaturanstieg fortsetzen. Wird eine Desinfektion festgestellt, bleibt die Pumpe wie im ungeregelten Fall für deren Dauer im Maxbetrieb, andernfalls geht die Pumpe in den Regelbetrieb zurück. Die weitere Behandlung der Desinfektionszyklen erfolgt wie im ersten Beispiel.

Dieses Verfahren kann auch dann angewendet werden, wenn die Temperaturregelung der Pumpe ausgeschaltet ist. Ein Ausschalten der Pumpensteuerung wird in diesem erfindungsgemäßen Verfahren dann durchgeführt, wenn der hinter der Pumpe oder im Pumpenauslauf angeordnete Temperatursensor durch die hohen Temperaturen die Pumpe herunterfährt und damit eine Desinfektion nicht oder nicht ausreichend zulässt. In diesem Zustand einer ausgeschalteten Pumpensteuerung wird durch das erfindungsgemäße Verfahren auch erkannt, dass die Wärmequelle eine höhere Temperatur als der Bereich normaler Temperaturen erzeugt und es werden auch die Zeitpunkte und Intervalle erkannt und gelernt.

Bei allen oben aufgeführten Verfahren ist die an den Sensor angeschlossene das/die Perioden/Intervalle erkennende Elektronik innerhalb, an oder in der Nähe der Pumpe angeordnet, die das Warmwasser umpumpt. Hierbei weist die das/die Perioden/Intervalle erkennende Elektronik ein Erkennungs- und Steuerungsprogramm auf.

## Patentansprüche

1. Verfahren im Warmwasserkreislauf, insbesondere einer Trinkwasserinstallation, mit einer das Warmwasser im Kreislauf umwälzenden Pumpe und einem die Wassertemperatur im Warmwasserkreislauf messenden Sensor, wobei, insbesondere zur Desinfektion, die Temperatur im Wassererwärmer periodisch über die höchste für das Warmwasser zu Nutzungszwecken erforderliche Normaltemperatur angehoben wird und wobei die Pumpe in Zeiträumen geringen Warmwasserverbrauchs abgeschaltet ist oder mit niedrigen Drehzahlen gefahren wird, **dadurch gekennzeichnet,** - dass
- in dem Fall, dass die Pumpe in Zeiträumen geringen Warmwasserverbrauchs abgeschaltet ist oder mit niedrigen Drehzahlen gefahren wird, zum Erkennen höherer periodischer Temperaturanstiege, insbesondere thermischer Desinfektionsintervalle, während Pumpenabschaltzeiten oder Zeiten niedriger Drehzahlen die Pumpe in einer Anfangsphase (Anlernphase) in einem Zeitabschnitt und/oder in mehreren Zeitabschnitten eingeschaltet und/oder mit höherer Drehzahl gefahren wird, oder,
- in dem Fall, dass zum Erkennen höherer periodischer Temperaturanstiege während des Pumpenlaufs die die Temperatur regelnde Pumpensteuerung in einer Anfangsphase (Anlernphase) in einem Zeitabschnitt und/oder in mehreren Zeitabschnitten ausgeschaltet wird,
und
- dass bei einem Ansteigen der vom Sensor während des Zeitabschnitts oder während der Zeitabschnitte gemessenen Temperatur über die höchste Normaltemperatur eine Elektronik den/die höheren vom Sensor erhaltenen Temperaturwert(e) erfasst und auswertet.

2. Verfahren nach Anspruch 1, **dadurch gekennzeichnet, dass** nach dem Erkennen eines höheren periodischen Temperaturanstiegs, insbesondere eines thermischen Desinfektionsintervalls, der Zeitpunkt des Beginns und/oder der Zeitraum der jeweiligen Periode insbesondere des jeweiligen Desinfektionsintervalls abgespeichert wird.

3. Verfahren nach einem der vorherigen Ansprüche, **dadurch gekennzeichnet, dass** nach dem Erkennen einer ersten Periode, insbesondere eines ersten Desinfektionsintervalls, weitere Perioden, insbesondere weitere Desinfektionsintervalle, gesucht und abgespeichert werden.

4. Verfahren nach einem der vorherigen Ansprüche, **dadurch gekennzeichnet, dass** zumindest während der Anfangsphase (Anlernphase) ein Temperaturanstieg **dadurch** erfasst wird, dass für die Pumpe ein höherer Volumenstrom gewählt wird, als zur Einhaltung der Temperatur erforderlich ist.

5. Verfahren nach einem der vorherigen Ansprüche, **dadurch gekennzeichnet, dass** nach dem Erkennen des oder der Perioden, insbesondere des oder der Desinfektionsintervalle, die Pumpe zumindest während der Periode, insbesondere des Desinfektionsintervalls, das Warmwasser hoher Temperatur insbesondere zur Desinfektion der Leitungen und angeschlossenen Vorrichtungen umpumpt.

6. Verfahren nach Anspruch 5, **dadurch gekennzeichnet, dass** die Pumpe das Umpumpen bereits vor dem Beginn des oder der erkannten Perioden, insbesondere des oder erkannten Desinfektionsintervalle beginnt.

7. Verfahren nach einem der vorherigen Ansprüche, **dadurch gekennzeichnet, dass** während der Anfangsphase (Anlernphase) die Pumpe mit reduzierter Drehzahl oder getaktet arbeitet.

8. Verfahren nach einem der vorherigen Ansprüche **gekennzeichnet durch** sein Abschalten nach 3 bis 14 Tagen insbesondere nach 7 Tagen.

9. Verfahren nach einem der vorherigen Ansprüche **dadurch gekennzeichnet, dass** die Anlernphase (Anlernphase) zyklisch, insbesondere alle 4 bis 8 Wochen, wiederholt wird.

## Claims

1. Method used in a hot-water circuit, in particular a drinking-water installation, with a pump circulating the hot water in the circuit and with a sensor measuring the water temperature in the hot-water circuit, the temperature in the water heater being periodically raised, particularly for disinfection, above the highest normal temperature required for the hot water for purposes of use, and the pump being switched off or run at low rotational speeds in periods of low hot-water consumption, **characterized in that**,
- in the event that the pump is switched off or run at low rotational speeds in periods of low hot-water consumption, in order to detect higher periodic temperature rises, in particular thermal disinfection intervals, during pump switch-off times or times of low rotational speeds, the pump is switched and/or run at a higher rotational speed in an initial phase (learning phase) in one time segment and/or in a plurality of time segments, or,
- in order to detect higher periodic temperature rises during the running of the pump, the temperature-regulating pump control is switched off in an initial phase (learning phase) in one time segment and/or in a plurality of time segments,
and
- **in that**, in the event of a rise of the temperature measured by the sensor during the time segment or time segments above the highest normal temperature, electronics detect and evaluate the higher temperature value or temperature values obtained by the sensor.

2. Method according to Claim 1, **characterized in that**, after the detection of a higher periodic temperature rise, in particular of a thermal disinfection interval, the time point of the commencement and/or the time span of the respective period, in particular, of the respective disinfection interval are/is stored.

3. Method according to one of the preceding claims, **characterized in that**, after the detection of a first period, in particular of a first disinfection interval, further periods, in particular further disinfection intervals, are sought and stored.

4. Method according to one of the preceding claims, **characterized in that**, at least during the initial phase (learning phase), a temperature rise is detected in that a higher volume flow is selected for the pump than is required in order to maintain the temperature.

5. Method according to one of the preceding claims, **characterized in that**, after the detection of the period or periods, in particular of the disinfection interval or disinfection intervals, the pump, at least during the period, in particular the disinfection interval, pumps around the high-temperature hot water, in particular, for the disinfection of the lines and connected devices.

6. Method according to Claim 5, **characterized in that** the pump commences pumping-around even before the commencement of the detected period or periods, in particular of the detected disinfection interval or disinfection intervals.

7. Method according to one of the preceding claims, **characterized in that**, during the initial phase (learning phase), the pump operates with reduced rotational speed or intermittently.

8. Method according to one of the preceding claims, **characterized by** its switch-off after 3 to 14 days, in particular after 7 days.

9. Method according to one of the preceding claims, **characterized in that** the initial phase (learning phase) is repeated cyclically, in particular every 4 to 8 weeks.

## Revendications

1. Procédé de régulation d'un circuit d'eau chaude, en particulier d'un circuit d'eau potable, à l'aide d'une pompe qui fait circuler l'eau chaude en circuit fermé et d'une sonde qui mesure la température de l'eau du circuit d'eau chaude, et dans lequel en particulier pour la désinfection, la température est relevée périodiquement dans le réchauffeur d'eau au-dessus de la température normale la plus élevée nécessaire pour les utilisations de l'eau chaude, la pompe étant débranchée ou utilisée à petit régime de rotation pendant les périodes où la consommation en eau chaude est basse,
**caractérisé en ce que**
au cas où la pompe est débranchée ou est utilisée à bas régime de rotation au cours des périodes où la consommation d'eau chaude est basse, pour détecter de hautes montées périodiques de la température et en particulier des intervalles de désinfection thermique, pendant les durées de débranchement de la pompe ou les durées où la pompe fonctionne à bas régime de rotation, la pompe est branchée et/ou utilisée à plus haut régime de rotation pendant un intervalle de temps et/ou pendant plusieurs intervalles de temps au cours d'une phase initiale (phase d'apprentissage) ou
au cas où pour détecter de hautes montées périodiques de la température pendant que la pompe fonctionne, la commande de pompe qui régule la température est débranchée pendant un intervalle de temps et/ou pendant plusieurs intervalles de temps au cours d'une phase initiale (phase d'apprentissage) et
**en ce que** lorsque la température mesurée par le détecteur pendant l'intervalle de temps ou pendant les intervalles de temps monte au-dessus de la température normale la plus élevée, une électronique détecte et évalue la ou les valeurs de température plus élevées obtenues du détecteur.

2. Procédé selon la revendication 1, **caractérisé en ce qu'**après une montée périodique en température, en particulier au cours d'un intervalle de désinfection thermique, l'instant du début et/ou la durée de chaque période en particulier de l'intervalle de désinfection concerné sont conservés en mémoire.

3. Procédé selon l'une des revendications précédentes, **caractérisé en ce qu'**après la détection d'une première période et en particulier d'un premier intervalle de désinfection, d'autres périodes et en particulier d'autres intervalles de désinfection sont recherchés et conservés en mémoire.

4. Procédé selon l'une des revendications précédentes, **caractérisé en ce qu'**au moins pendant la phase initiale (phase d'apprentissage), une augmentation de température est détectée par le fait que le débit volumique sélectionné pour la pompe est plus élevé que celui qui est nécessaire pour maintenir la température.

5. Procédé selon l'une des revendications précédentes, **caractérisé en ce qu'**après la détection de la ou des périodes et en particulier du ou des intervalles de désinfection, la pompe fait circuler l'eau chaude à plus haute température en particulier pour la désinfection des conduits et des dispositifs raccordés au moins pendant la période et en particulier pendant l'intervalle de désinfection.

6. Procédé selon la revendication 5, **caractérisé en ce que** la pompe commence la recirculation avant le début de la ou des périodes détectées et en particulier du ou des intervalles de désinfection détectés.

7. Procédé selon l'une des revendications précédentes, **caractérisé en ce que** pendant là phase initiale (phase d'apprentissage), la pompe travaille à régime de rotation réduit ou de manière cadencée.

8. Procédé selon l'une des revendications précédentes, **caractérisé par** son débranchement après 3 à 14 jours et en particulier après 7 jours.

9. Procédé selon l'une des revendications précédentes, **caractérisé en ce que** la phase d'apprentissage (phase d'apprentissage) est répétée cycliquement et en particulier toutes les 4 à 8 semaines.
